# EUROPEAN PATENT SPECIFICATION

(11) **EP 3 928 622 B1**
(45) Date of publication and mention of the grant of the patent: **01.05.2024**
(21) Application number: 20767455.7
(22) Date of filing: 20.05.2020
(51) Int. Cl.: A22C 13/02

(54) **CASING ROUND PIPE, APPLICATION THEREOF, AND USE METHOD THEREFOR**
WURSTHÜLLE UND IHRE ANWENDUNG SOWIE VERWENDUNGSVERFAHREN
TUBE ROND DE BOÎTIER, SON APPLICATION ET SON PROCÉDÉ D'UTILISATION

(30) Priority: 15.05.2020 CN 202010414308
(43) Date of publication of application: 29.12.2021
(73) Proprietor: Shanghai Linzhi Rubber & Plastic Products Co., Ltd., Shanghai 201600 (CN)
(72) Inventor: SHI, LinChong, Shanghai 201600 (CN)
(74) Representative: Cabinet Chaillot
(86) International application number: PCT/CN2020/091363
(87) International publication number: WO 2021/227114

(56) References cited:
- WO-A1-2018/190721
- CN-A- 110 881 515
- CN-A- 110 881 515
- CN-U- 206 078 856
- CN-U- 207 491 968
- CN-Y- 2 930 306
- DE-U1-202016 100 772

## Description

### Technical Field

The present invention relates to the technical filed of sausage casing processing, and in particular to a sausage casing pipe and its application and use method.

### Background

Sausage casing is a translucent film left after the intestines of livestock are processed to remove other unwanted tissues in the intestines. It is an ideal material for filling all kinds of sausages, and is mainly used to make the coatings of the sausage and filled sausage. The currently known dry natural sausage casing processing technology is to make a mold in advance, and then paste the whole natural sausage casing or section onto the mold by overlapping or pasting, and then air-dry or oven-dry the natural sausage casing and then remove it from the mold, and change the shape, size and length of the mold to obtain a desired dried natural sausage casing. Generally, in the prior art, a hard plastic round pipe is used as a sausage casing supporting auxiliary material, and the sausage casing falls off along the outer wall of the round pipe, thereby improving work efficiency, in which in order to fix the sliding of the sausage casing, the sausage casing is usually fixed on the plastic round pipe by rubber elements on both sides of the plastic round pipe after the sausage casing is tubed. However, because the rubber element and the plastic round pipe are not fixedly connected, in the process of normal use, the rubber element can easily slip from the wall of the plastic pipe to the filling processing equipment, thus causing accidental ingestion of the element and then causing harm to human health. Patent CN110881 515A also discloses a spacer-free round pipe and its application, eliminating the need to fix the rubber stoppers and being necessary to put a separator (or other separator-like material) on one end of the pipe and then compress it onto the pipe, and there is no risk of the rubber stopper falling, so there is no obstruction when removing the sausage casing. However, this invention only focuses on the function of removing the sausage casing, ignoring the operation when sliding on the sausage casing. The inventor has found that the stopper-free pipe described in the patent is not conducive to the operation of sliding on the sausage casing, thus affecting the production efficiency when in operation.

### Summary

In order to solve the above technical problems, the first aspect of the present invention provides a sausage casing pipe as defined in claim 1 As a preferred technical solution, in the present invention, the length of the first connector 301 perpendicular to the axial direction of the pipe body 1 is equal to L2, and a size of the L2 is 0.5-3 mm.

As a preferred technical solution, in the present invention, when the size of the L1 is 0, there is no connection between the edge of the movable end of the arc-shaped pressing piece 202 and the pipe body 1.

As a preferred technical solution, in the present invention, a movable opening 202-1 is disposed between the movable end of the arc-shaped pressing piece 202 and the first connector 301.

As a preferred technical solution, in the present invention, when the size of the L1 is 0 < L1 ≤ L2, a triangular connector 202-2 is disposed between the pipe body 1 and the movable end of the arc-shaped pressing piece 202; a top end of the triangular connector 202-2 is connected to the movable end of the arc-shaped pressing piece 202, and a bottom side of the triangular connector 202-2 and the pipe body 1 are integrally connected.

As a preferred technical solution, in the present invention, each of the two sides of the connection region between the open/close end of square pressing piece 401 and the finger pressing end of square pressing piece 402 is connected to the pipe body 1 through a third connector 501.

As a preferred technical solution, in the present invention, the material of the sausage casing pipe is selected from any one or a combination of polyethylene, polypropylene, polyvinyl chloride, and polycarbonate.

As a preferred technical solution, in the present invention, the polyethylene is food grade polyethylene.

The second aspect of the present invention provides an application of the sausage casing pipe, which is applied as a supporting part of the sausage casing.

The third aspect of the present invention provides a method of using the sausage casing pipe, the method comprising at least the step of: sliding on the sausage casing from the arc-shaped pressing piece end.

Compared with the prior art, the present invention has the following excellent beneficial effects:
the invention provides a sausage casing pipe, which is mainly applied as a supporting part of sausage casing. The design features of the present invention focus on the excellent function of removing the sausage casing, and the sausage casing pipe has the characteristic of smoother operation when sliding on the sausage casing. In the present invention, a section of the sausage casing pipe is designed with an arc-shaped pressing piece, wherein one end of the arc-shaped pressing piece facing the head of the pipe is fixed to the pipe body by the second connector to form a fixed end of the arc-shaped pressing piece; the inside end of the arc-shaped pressing piece is movable, and the sausage casing is put on from an end of the arc-shaped pressing piece of the pipe. In the meantime, use the fingers to press the end of the square pressing piece, so that the open/close end of the square pressing piece bends up and fix the sausage casing; after the sausage casing is tubed, the head of the pipe body connected with the fixed end of the arc-shaped pressing piece or the second connector makes the movable end of the arc-shaped pressing piece bend up and fixes the sausage casing. The sausage casing pipe can easily fix the sausage casing through the movable end of the arc-shaped pressing piece and the open/close end of the square pressing piece, thus avoids the use of rubber element. When removing the sausage casing, firstly, push the sausage casing that falls down to the gap under the pressing piece until it slides to the wall of the pipe, and then press down the movable end of the arc-shaped pressing piece and the open/close end of the square pressing piece, so that the sausage casing can be smoothly removed from the sausage casing pipe, and finally slide the pipe onto the stainless filling horn and push the casing onto the filling horn, which is convenient and quick. In the process of sliding on the sausage casing, due to the force of the second connector between the fixed end of the arc-shaped pressing piece and the pipe body, the process of loading the sausage casing onto the sausage casing pipe is smoother, so as to eliminate the situation that the casing be stuck into the gap under the pressing piece caused by over pressing the pressing piece, thus avoiding the defect of unsmooth operation caused by the natural tightening characteristics of sausage casing.

In addition, the gap distance between the movable end of the arc-shaped pressing piece and the pipe body in the present invention is not limited. In particular, the applicant found that when there is no gap between the movable end of the arc-shaped pressing piece and the pipe body, and when the movable end of the arc-shaped pressing piece can be moved up and down, the removing of the sausage casing will be smoother, and when removing the sausage casing, there is no risk of breaking the sausage casing. Further, the inventor also found that when the gap distance between the movable end of the arc-shaped pressing piece and the pipe body becomes larger, a triangular connection structure can be designed between the pipe body and the movable end of the arc-shaped pressing piece, in which it is more convenient when processing sausage casing pipe. Since the movable end of the arc-shaped pressing piece and the pipe body are connected together, when the sausage casing is put on, it will be smoother and improves work efficiency. After the sausage casing is put on, the triangular connection point is designed as a clamping point. The advantage of the design is that it is easy to break and it is more convenient for the movable end of the arc-shaped pressing piece to be lifted to fix the sausage casing while leaving the burrs (residual) inside of the pipe body, so that when the sausage casing is removed, it can be easily pushed towards the filling horn without being scratched by the burrs.

### Brief Description of Drawings

Fig.1 is a schematic front view of the sausage casing pipe described in Example 1.
Fig. 2 is a partial enlarged view of the A end of Fig. 1.
Fig. 3 is a schematic front view of the sausage casing pipe described in Example 3.
Fig. 4 is a top view corresponding to the structural schematic diagram in Fig. 3.
Fig. 5 is a schematic front view of the sausage casing pipe described in Example 4.
Fig. 6 is a plan view corresponding to the structural schematic diagram in Fig. 5.

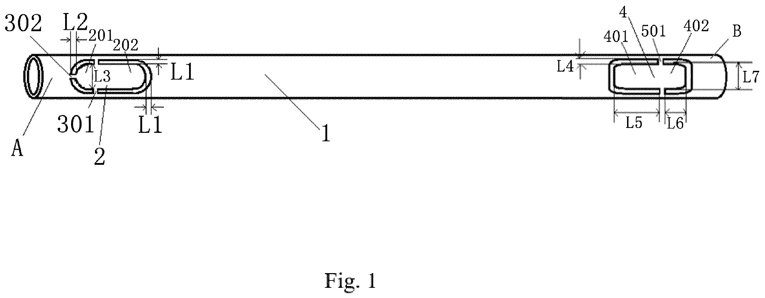

The reference labels in Figs. 1 - 4 are as follows:
1 - pipe body; 2 - arc-shaped pressing piece; 201 - fixed end of the arc-shaped pressing piece; 202 - movable end of the arc-shaped pressing piece; 301 - first connector; 302 - second connector; 4 - square pressing piece; 401 - open/close end of the square pressing piece; 402 - finger pressing end of the square pressing piece; 501 - third connector; 202-1 - movable opening; 202-2 - triangular connector.

### Detail Description of Embodiments

The following provides a clear and complete description of the technical features of the technical solutions provided by the present invention in conjunction with specific implementations. Obviously, the described embodiments are only a part of the embodiments of the present invention, rather than all of the embodiments. Based on the embodiments of the present invention, all other embodiments obtained by those of ordinary skill in the art without inventive steps shall fall within the protection scope of the present invention.

Those skilled in the art can understand that, unless otherwise defined, all terms (including technical and scientific terms) used herein have the same meanings as those commonly understood by those of ordinary skill in the art to which the present invention belongs. It should also be understood that terms such as those defined in a general dictionary should be understood to have a meaning consistent with the meaning in the context of the prior art, and unless it is defined as here, it will not be interpreted in an idealized or overly formal meaning.

The words "preferred", "preferably", "more preferred", etc. in the present invention refer to unclaimed embodiments that can provide some beneficial effects under certain circumstances. However, other embodiments may also be preferred under the same or other circumstances. In addition, the expression of one or more preferred embodiments does not imply that other embodiments are not available, nor is it intended to exclude other embodiments from the scope of the present disclosure.

The first aspect of the present invention provides a sausage casing pipe, comprising a pipe body 1, wherein each of two sides close to one end of the pipe body 1 is integrated with an arc-shaped pressing piece 2, and each of two sides close to the other end of the pipe body 1 is integrated with a square pressing piece 4, wherein the square pressing piece 4 comprises an open/close end at one side and a finger pressing end at the other end, the open/close end of square pressing piece 401 and the finger pressing end of square pressing piece 402 being integrally connected;
the arc-shaped pressing piece 2 comprises a fixed end at one side 201 and a movable end at the other end 202, the fixed end of the arc-shaped pressing piece 201 and the movable end of the arc-shaped pressing piece 202 being integrally connected; each of two sides of a connection region between the fixed end of the arc-shaped pressing piece 201 and the movable end of the arc-shaped pressing piece 202 is connected to the pipe body 1 through the first connector 301; the top end of the fixed end of the arc-shaped pressing piece 201 is connected to the pipe body 1 through the second connector 302; the distance between the edge of the movable end of the arc-shaped pressing piece 202 and the pipe body 1 is L1, and the length of the second connector 302 along the axial direction of the pipe body 1 is L2; and the size of the L1 is 0 ≤ L1 ≤ L2.

In some embodiments, in the present application, the length of the first connector 301 perpendicular to the axial direction of the pipe body 1 is equal to L2, and the size of the L2 is 0.5-3 mm, preferably, the size of the L2 is 1-2 mm; more preferably, the size of the L2 is 1.3 mm.

In some embodiments, when the size of the L1 is 0, there is no connection between the edge of the movable end of the arc-shaped pressing piece 202 and the pipe body 1.

In some embodiments, a movable opening 202-1 is disposed between the movable end of the arc-shaped pressing piece 202 and the first connector 301.

In some embodiments, when the size of the L1 is 0 < L1 ≤ L2, a triangular connector 202-2 is disposed between the pipe body 1 and the movable end of the arc-shaped pressing piece 202; the top end of the triangular connector 202-2 is connected to the movable end of the arc-shaped pressing piece 202, and the bottom side of the triangular connector 202-2 and the pipe body 1 are integrally connected.

In some embodiments, each of the two sides of the connection region between the open/close end of square pressing piece 401 and the finger pressing end of square pressing piece 402 is connected to the pipe body 1 through a third connector 501.

In some embodiments, the length of the second connector 302 along the axial direction perpendicular to the pipe body 1 is L4; the size of L4 is 0.5-3mm; preferably, the size of L4 is 1 - 2mm; more preferably, the size of L4 is 1.3 mm.

In some embodiments, the length of the open/close end of the square pressing piece is L5, and the finger pressing end of the square pressing piece 402 is L6; the length ratio of L6 and L5 is 1: (1.5-2.5); preferably, the length of finger pressing end of the square pressing piece 402 is L6; the length ratio of L6 and L5 is 1 : 2.1.

In some embodiments, the width of the arc-shaped pressing piece 2 after being flattened is L3; the width of the open/close end of the square pressing piece 401 and the finger pressing end of the square pressing piece 402 after being flattened is L7; the values of L3 and L7 are 0.2-0.4 times the circumference of the cross section of the pipe body 1; preferably, the values of L3 and L7 are 0.3 times the circumference of the cross section of the pipe body 1.

In some embodiments, the material of the sausage casing pipe is selected from any one or a combination of polyethylene, polypropylene, polyvinyl chloride, and polycarbonate, preferably, the material of the sausage casing pipe is selected from polyethylene; more preferably, the material of the sausage casing pipe is high-density polyethylene

In some embodiments, the polyethylene is food grade polyethylene; preferably, the polyethylene is food grade HDPE.

The food grade polyethylene in the present invention complies with the regulations of GB 4806.7-2016 "National Food Safety Standard Food Contact Plastic Materials and Products".

The second aspect of the present application provides application of the sausage casing pipe, which is applied as a supporting part of the sausage casing.

The third aspect of the present application provides a method of using the sausage casing pipe, the method comprising at least the step of: sliding on the sausage casing from the arc-shaped pressing piece end.

The present invention will be described in detail through the following embodiments. The following embodiments can only be used for further explanation of the present invention and are not understood as limiting the protection scope of the present invention, which is only defined by the subject-matter of the appended claims.

Non-essential corrections and adjustments made by professionals in the art based on the above-mentioned invention content may still fall within the protection scope of the present invention.

### Example 1

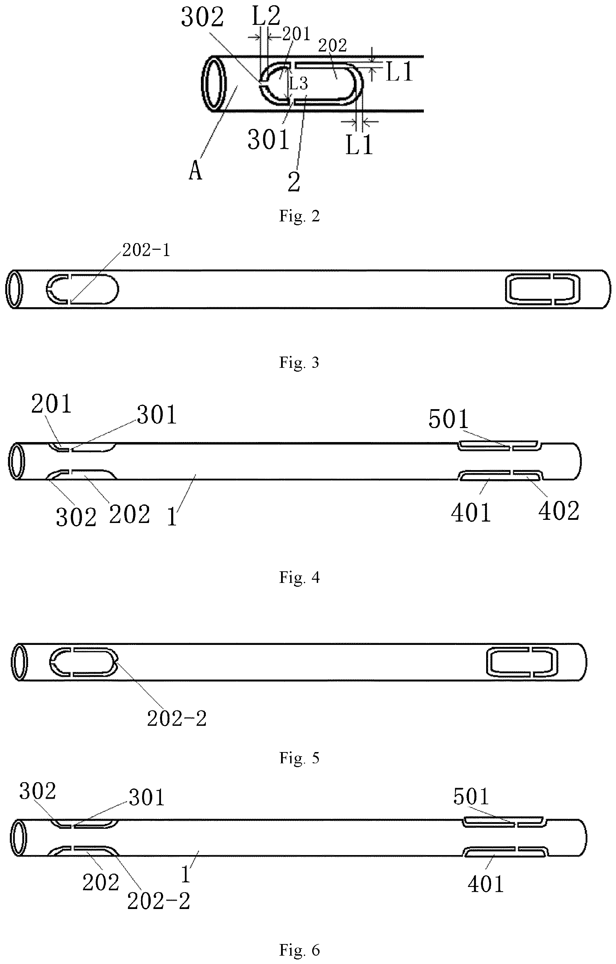

A sausage casing pipe, as shown in Figs. 1 and 2, comprising a pipe body 1 is provided, wherein each of two sides close to one end of the pipe body 1 is integrated with an arc-shaped pressing piece 2, and each of two sides close to the other end of the pipe body 1 is integrated with a square pressing piece 4, wherein the square pressing piece 4 comprises an open/close end of the square pressing piece 401 and a finger pressing end of the square pressing piece 402, the open/close end of square pressing piece 401 and the finger pressing end of square pressing piece 402 being integrally connected.

The arc-shaped pressing piece 2 comprises a fixed end at one side 201 and a movable end of the other end 202, the fixed end of the arc-shaped pressing piece 201 and the movable end of the arc-shaped pressing piece 202 being integrally connected; each of two sides of a connection region between the fixed end of the arc-shaped pressing piece 201 and the movable end of the arc-shaped pressing piece 202 is connected to the pipe body 1 through the first connector 301; the top end of the fixed end of the arc-shaped pressing piece 201 is connected to the pipe body 1 through the second connector 302; a distance between the edge of the movable end of the arc-shaped pressing piece 202 and the pipe body 1 is L1, and the length of the second connector 302 along the axial direction of the pipe body 1 is L2; and a size of the L1 is L1 = L2.

The length of the first connector 301 perpendicular to the axial direction of the pipe body 1 is equal to L2, and a size of the L2 is 1.3 mm.

Each of the two sides of the connection region between the open/close end of the square pressing piece 401 and the finger pressing end of the square pressing piece 402 is connected to the pipe body 1 through a third connector 501.

The length of the second connector 302 perpendicular to the axial direction of the pipe body 1 is L4, and a size of the L4 is 1.3 mm.

The open/close end of the square pressing piece 401 is L5, and the finger pressing end of the square pressing piece 402 is L6. The length ratio of L6 and L5 is 1 : 2.1.

The width of the arc-shaped pressing piece 2 after being flattened is L3; both the width of the open/close end of the square pressing piece 401 and the width of the finger pressing end of the square pressing piece 402 after being flattened are L7; the values of L3 and L7 are 0.3 times the circumference of the cross section of the pipe body 1.

The polyethylene is food grade HDPE.

### Example 2

A sausage casing pipe comprising a pipe body 1 is provided, wherein each of two sides close to one end of the pipe body 1 is integrated with an arc-shaped pressing piece 2, and each of two sides close to the other end of the pipe body 1 is integrated with a square pressing piece 4, wherein the square pressing piece 4 comprises an open/close end of the square pressing piece 401 and a finger pressing end of the square pressing piece 402, the open/close end of square pressing piece 401 and the finger pressing end of square pressing piece 402 being integrally connected.

The arc-shaped pressing piece 2 comprises a fixed end at one side 201 and a movable end of the other end 202, the fixed end of the arc-shaped pressing piece 201 and the movable end of the arc-shaped pressing piece 202 being integrally connected; each of two sides of a connection region between the fixed end of the arc-shaped pressing piece 201 and the movable end of the arc-shaped pressing piece 202 is connected to the pipe body 1 through a first connector 301; a top end of the fixed end of the arc-shaped pressing piece 201 is connected to the pipe body 1 through a second connector 302; a distance between the edge of the movable end of the arc-shaped pressing piece 202 and the pipe body 1 is L1, and the length of the second connector 302 along the axial direction of the pipe body 1 is L2. When the size of the L1 is 0, there is no connection between the edge of the movable end of the arc-shaped pressing piece 202 and the pipe body 1.

The length of the first connector 301 perpendicular to the axial direction of the pipe body 1 is equal to L2, and the size of the L2 is 1.3 mm.

Each of the two sides of the connection region between the open/close end of the square pressing piece 401 and the finger pressing end of the square pressing piece 402 is connected to the pipe body 1 through the third connector 501.

The length of the second connector 302 perpendicular to the axial direction of the pipe body 1 is L4, and the size of the L4 is 1.3 mm.

The open/close end of the square pressing piece 401 is L5, and the finger pressing end of the square pressing piece 402 is L6. The length ratio of L6 and L5 is 1 : 2.1.

The width of the arc-shaped pressing piece 2 after being flattened is L3; both the width of the open/close end of the square pressing piece 401 and the width of the finger pressing end of the square pressing piece 402 after being flattened are L7; the values of L3 and L7 are 0.3 times the circumference of the cross section of the pipe body 1.

The polyethylene is food grade HDPE.

### Example 3

A sausage casing pipe, as shown in Figs. 3-4, comprising a pipe body 1 is provided, wherein each of two sides close to one end of the pipe body 1 is integrated with an arc-shaped pressing piece 2, and each of two sides close to the other end of the pipe body 1 is integrated with a square pressing piece 4, wherein the square pressing piece 4 comprises an open/close end of the square pressing piece 401 and a finger pressing end of the square pressing piece 402, the open/close end of square pressing piece 401 and the finger pressing end of square pressing piece 402 being integrally connected.

The arc-shaped pressing piece 2 comprises a fixed end at one side 201 and a movable end of the other end 202, the fixed end of the arc-shaped pressing piece 201 and the movable end of the arc-shaped pressing piece 202 being integrally connected; each of two sides of the connection region between the fixed end of the arc-shaped pressing piece 201 and the movable end of the arc-shaped pressing piece 202 is connected to the pipe body 1 through the first connector 301; the top end of the fixed end of the arc-shaped pressing piece 201 is connected to the pipe body 1 through the second connector 302; the distance between the edge of the movable end of the arc-shaped pressing piece 202 and the pipe body 1 is L1, and the length of the second connector 302 along the axial direction of the pipe body 1 is L2. When the size of the L1 is 0, there is no connection between the edge of the movable end of the arc-shaped pressing piece 202 and the pipe body 1. A movable opening 202-1 is disposed between the movable end of the arc-shaped pressing piece 202 and the first connector 301.

The length of the first connector 301 perpendicular to the axial direction of the pipe body 1 is equal to L2, and the size of the L2 is 1.3 mm.

Each of the two sides of the connection region between the open/close end of the square pressing piece 401 and the finger pressing end of the square pressing piece 402 is connected to the pipe body 1 through the third connector 501.

The length of the second connector 302 perpendicular to the axial direction of the pipe body 1 is L4, and the size of the L4 is 1.3 mm.

The open/close end of the square pressing piece 401 is L5, and the finger pressing end of the square pressing piece 402 is L6. The length ratio of L6 and L5 is 1:2.1.

The width of the arc-shaped pressing piece 2 after being flattened is L3; both the width of the open/close end of the square pressing piece 401 and the width of the finger pressing end of the square pressing piece 402 after being flattened are L7; the values of L3 and L7 are 0.3 times the circumference of the cross section of the pipe body 1.

The polyethylene is food grade HDPE.

### Example 4

A sausage casing pipe, as shown in Figs. 5-6, comprising a pipe body 1 is provided, wherein each of two sides close to one end of the pipe body 1 is integrated with an arc-shaped pressing piece 2, and each of two sides close to the other end of the pipe body 1 is integrated with a square pressing piece 4, wherein the square pressing piece 4 comprises an open/close end of the square pressing piece 401 and a finger pressing end of the square pressing piece 402, the open/close end of square pressing piece 401 and the finger pressing end of square pressing piece 402 being integrally connected.

The arc-shaped pressing piece 2 comprises a fixed end at one side 201 and a movable end of the other end 202, the fixed end of the arc-shaped pressing piece 201 and the movable end of the arc-shaped pressing piece 202 being integrally connected; each of two sides of a connection region between the fixed end of the arc-shaped pressing piece 201 and the movable end of the arc-shaped pressing piece 202 is connected to the pipe body 1 through the first connector 301; the top end of the fixed end of the arc-shaped pressing piece 201 is connected to the pipe body 1 through the second connector 302; the distance between the edge of the movable end of the arc-shaped pressing piece 202 and the pipe body 1 is L1, and the length of the second connector 302 along the axial direction of the pipe body 1 is L2; and the size of the L1 is L1=L2. A triangular connector 202-2 is disposed between the pipe body 1 and the movable end of the arc-shaped pressing piece 202; the top end of the triangular connector 202-2 is connected to the movable end of the arc-shaped pressing piece 202, and the bottom side of the triangular connector 202-2 and the pipe body 1 are integrally connected.

The length of the first connector 301 perpendicular to the axial direction of the pipe body 1 is equal to L2, and the size of the L2 is 1.3 mm.

Each of the two sides of the connection region between the open/close end of the square pressing piece 401 and the finger pressing end of the square pressing piece 402 is connected to the pipe body 1 through the third connector 501.

The length of the second connector 302 perpendicular to the axial direction of the pipe body 1 is L4, and the size of the L4 is 1.3 mm.

The open/close end of the square pressing piece 401 is L5, and the finger pressing end of the square pressing piece 402 is L6. The length ratio of L6 and L5 is 1:2.1.

The width of the arc-shaped pressing piece 2 after being flattened is L3; both the width of the open/close end of the square pressing piece 401 and the width of the finger pressing end of the square pressing piece 402 after being flattened are L7; the values of L3 and L7 are 0.3 times the circumference of the cross section of the pipe body 1.

The polyethylene is food grade HDPE.

## Claims

1. A sausage casing pipe for supporting sausage casing, comprising a pipe body (1), wherein one end of the pipe body (1) is integrated with two arc-shaped pressing pieces (2) at two opposite sides, and the other end of the pipe body (1) is integrated with two square pressing pieces (4) at two opposite sides; each of the square pressing pieces (4) comprises an open/close end at one side (401) and a finger pressing end at the other end (402), wherein the open/close end of the square pressing piece (401) and the finger pressing end of the square pressing piece (402) are integrally connected;
the arc-shaped pressing piece (2) comprises a fixed end at one side (201) and a movable end at the other end (202), wherein the fixed end of the arc-shaped pressing piece (201) and the movable end of the arc-shaped pressing piece (202) are integrally connected; each of two sides of a connection region between the fixed end of the arc-shaped pressing piece (201) and the movable end of the arc-shaped pressing piece (202) is connected to the pipe body (1) through the first connector (301); **characterized in that** the top end of the fixed end of the arc-shaped pressing piece (201) is connected to the pipe body (1) through a second connector (302); the distance between the edge of the movable end of the arc-shaped pressing piece (202) and the pipe body (1) is L1, and a length of the second connector (302) along an axial direction of the pipe body (1) is L2; and the size of the L1 is 0 ≤ L1 ≤ L2.

2. The sausage casing pipe according to claim 1, **characterized in that** a length of the first connector (301) perpendicular to the axial direction of the pipe body (1) is equal to L2, and the size of the L2 is 0.5 - 3 mm.

3. The sausage casing pipe according to claim 1, **characterized in that** when the size of the L1 is 0, there is no connection between the edge of the movable end of the arc-shaped pressing piece (202) and the pipe body (1).

4. The sausage casing pipe according to claim 3, **characterized in that** a movable opening (202-1) is disposed between the movable end of the arc-shaped pressing piece (202) and the first connector (301).

5. The sausage casing pipe according to claim 1, **characterized in that** when the size of the L1 is 0 < L1 ≤ L2, a triangular connector (202-2) is disposed between the pipe body (1) and the movable end of the arc-shaped pressing piece (202); the top end of the triangular connector (202-2) is connected to the movable end of the arc-shaped pressing piece (202), and the bottom side of the triangular connector (202-2) and the pipe body (1) are integrally connected.

6. The sausage casing pipe according to claim 1, **characterized in that** each of the two sides of the connection region between the open/close end of square pressing piece (401) and the finger pressing end of square pressing piece (402) is connected to the pipe body (1) through a third connector(501).

7. The sausage casing pipe according to any one of claims 1-6, **characterized in that** the material of the sausage casing pipe is selected from any one or a combination of polyethylene, polypropylene, polyvinyl chloride, and polycarbonate.

8. The sausage casing pipe according to claim 7, **characterized in that** the polyethylene is food grade polyethylene.

9. A use of the sausage casing pipe of any one of claims 1-8, **characterized in that** it is applied as a supporting part of the sausage casing.

10. A method of using the sausage casing pipe as defined in any one of claims 1 to 8, **characterized in that** the method comprising at least the step of: sliding on the sausage casing from the arc-shaped pressing piece end.

## Patentansprüche

1. - Wursthüllenrohr, umfassend einen Rohrkörper (1), wobei der Rohrkörper zum Halten und Tragen von Wursthüllen, insbesondere zum Auflegen von Wursthüllen auf ein Füllhorn, ausgebildet ist, wobei an einem Ende des Rohrkörpers (1) zwei bogenförmige Pressstücke (2) an zwei gegenüberliegenden Seiten und am anderen Ende des Rohrkörpers (1) zwei quadratische Pressstücke (4) an zwei gegenüberliegenden Seiten integriert sind, wobei jedes der quadratischen Pressstücke (4) ein offenes/geschlossenes Ende (401) an einer Seite und ein fingerpressendes Ende (402) am anderen Ende aufweist, wobei das offene/geschlossene Ende (401) des quadratischen Pressstücks und das fingerpressende Ende (402) des quadratischen Pressstücks einstückig verbunden sind;
wobei das bogenförmige Pressstück (2) ein festes Ende an einer Seite (201) und ein bewegliches Ende am anderen Ende (202) aufweist, wobei das feste Ende des bogenförmigen Pressstücks (201) und das bewegliche Ende des bogenförmigen Pressstücks (202) einstückig verbunden sind; wobei jede der beiden Seiten eines Verbindungsbereichs zwischen dem festen Ende des bogenförmigen Pressstücks (201) und dem beweglichen Ende des bogenförmigen Pressstücks (202) mit dem Rohrkörper (1) durch den ersten Verbinder (301) verbunden ist; **dadurch gekennzeichnet, dass** das obere Ende des festen Endes des bogenförmigen Pressstücks (201) mit dem Rohrkörper (1) durch den zweiten Verbinder (302) verbunden ist, wobei der Abstand zwischen der Kante des beweglichen Endes des bogenförmigen Pressstücks (202) und dem Rohrkörper (1) L1 ist, und wobei die Länge des zweiten Verbindungsstücks (302) entlang der axialen Richtung des Rohrkörpers (1) L2 ist; und wobei die Größe von L1 0 ≤ L1 ≤ L2 ist.

2. - Wursthüllenrohr nach Anspruch 1, **dadurch gekennzeichnet, dass** die Länge des ersten Verbinders (301) senkrecht zur axialen Richtung des Rohrkörpers (1) gleich L2 ist und die Größe von L2 0,5 - 3 mm beträgt.

3. - Wursthüllenrohr nach Anspruch 1, **dadurch gekennzeichnet, dass**, wenn die Größe von L1 von 0 ist, keine Verbindung zwischen dem Rand des beweglichen Endes des bogenförmigen Pressstücks (202) und dem Rohrkörper (1) vorhanden ist.

4. - Wursthüllenrohr nach Anspruch 3, **dadurch gekennzeichnet, dass** zwischen dem beweglichen Ende des bogenförmigen Pressstücks (202) und dem ersten Verbinder (301) eine bewegliche Öffnung (202-1) angeordnet ist.

5. - Wursthüllenrohr nach Anspruch 1, **dadurch gekennzeichnet, dass**, wenn die Größe von L1 0 < L1 ≤ L2 ist, ein dreieckiger Verbinder (202-2) zwischen dem Rohrkörper (1) und dem beweglichen Ende des bogenförmigen Pressstücks (202) angeordnet ist; wobei das obere Ende des dreieckigen Verbinders (202-2) mit dem beweglichen Ende des bogenförmigen Pressstücks (202) verbunden ist und die Unterseite des dreieckigen Verbinders (202-2) und der Rohrkörper (1) einstückig verbunden sind.

6. - Wursthüllenrohr nach Anspruch 1, **dadurch gekennzeichnet, dass** jede der beiden Seiten des Verbindungsbereichs zwischen dem offenen/geschlossenen Ende (401) des quadratischen Pressstücks und dem fingerpressenden Ende (402) des quadratischen Pressstücks über einen dritten Verbinder (501) mit dem Rohrkörper (1) verbunden ist.

7. - Wursthüllenrohr nach einem der Ansprüche 1 bis 6, **dadurch gekennzeichnet, dass** das Material des Wursthüllenrohrs ausgewählt ist aus einem oder einer Kombination von Polyethylen, Polypropylen, Polyvinylchlorid und Polycarbonat.

8. - Wursthüllenrohr nach Anspruch 7, **dadurch gekennzeichnet, dass** es sich bei dem Polyethylen um Polyethylen in Lebensmittelqualität handelt.

9. - Verwendung des Wursthüllenrohrs nach einem der Ansprüche 1 bis 8, **dadurch gekennzeichnet, dass** es als tragender Teil der Wursthülle eingesetzt wird.

10. - Verfahren zur Verwendung des Wursthüllenrohrs nach einem der Ansprüche 1 bis 8, **dadurch gekennzeichnet, dass** das Verfahren mindestens den folgenden Schritt umfasst. Aufschieben der Wursthülle vom bogenförmigen Pressstückende aus.

## Revendications

1. - Un tuyau de boyau de saucisse comprenant un corps de tuyau (1), qui est configuré pour tenir et supporter des boyaux de saucisse, et en particulier pour charger des boyaux de saucisse sur une corne de bourrage, dans lequel une extrémité du corps de tuyau (1) est intégrée avec deux pièces de pression en forme d'arc (2) sur deux côtés opposés, et l'autre extrémité du corps de tuyau (1) est intégrée avec deux pièces de pression carrées (4) sur deux côtés opposés ; chacune des pièces de pression carrées (4) comprend une extrémité ouverte/fermée (401) d'un côtéet une extrémité de pression des doigts (402) à l'autre extrémité, extrémité ouverte/fermée (401) de la pièces de pression carrées et extrémité de pression des doigts (402) de la pièces de pression carrées étant intégralement reliées;
la pièces de pression en forme d'arc (2) comprend une extrémité fixe (201) d'un côtéet une extrémité mobile (202) à l'autre extrémité, l'extrémité fixe (201) de la pièces de pression en forme d'arc et l'extrémité mobile (202) de la pièces de pression en forme d'arc étant intégralement reliées ; chacun des deux côtés d'une zone de connexion entre l'extrémité fixe (201) de la pièce de pression en forme d'arc et l'extrémité mobile (202) de la pièces de pression en forme d'arc est relié au corps de tuyau (1) par l'intermédiaire du premier connecteur (301); **caractérisé en ce que** l'extrémité supérieure de l'extrémité fixe (201) de la pièce de pression en forme d'arc est reliée au corps de tuyau (1) par le second connecteur (302) ; la distance entre le bord de l'extrémité mobile (202) de la pièce de pression en forme d'arc et le corps de tuyau (1) est L1, et la longueur du second connecteur (302) le long de la direction axiale du corps de tuyau (1) est L2 ; et la taille de L1 est 0 ≤ L1 ≤ L2.

2. - Tuyau de boyau de saucisse selon la revendication 1, **caractérisé en ce que** la longueur du premier connecteur (301) perpendiculaire à la direction axiale du corps de tuyau (1) est égale à L2, et la taille de L2 est de 0,5 - 3 mm.

3. - Tuyau de boyau de saucisse selon la revendication 1, **caractérisé en ce que** lorsque la taille de L1 est 0, il n'y a pas de connexion entre le bord de l'extrémité mobile (202) de la pièce de pression en forme d'arc et le corps de tuyau (1).

4. - Tuyau de boyau de saucisse selon la revendication 3, **caractérisé en ce qu'**une ouverture mobile (202-1) est disposée entre l'extrémité mobile (202) de la pièce de pression en forme d'arc et le premier connecteur (301) .

5. - Tuyau de boyau de saucisse selon la revendication 1, **caractérisé en ce que** lorsque la taille de L1 est 0 < L1 ≤ L2, un connecteur triangulaire (202-2) est disposé entre le corps de tuyau (1) et l'extrémité mobile (202) de la pièce de pression en forme d'arc; l'extrémité supérieure du connecteur triangulaire (202-2) est reliée à l'extrémité mobile (202) de la pièce de pression en forme d'arc, et le côté inférieur du connecteur triangulaire (202-2) et le corps de tuyau (1) sont intégralement raccordés.

6. - Tuyau de boyau de saucisse selon la revendication 1, **caractérisé par le fait que** chacun des deux côtés de la zone de connexion entre l'extrémité ouverte/fermée (401) de la pièce de pression carrée et l'extrémité de pression du doigt (402) de la pièce de pression carrée est connecté au corps de tuyau (1) par l'intermédiaire d'un troisième connecteur (501).

7. - Tuyau de boyau de saucisse selon l'une des revendications 1 à 6, **caractérisé par le fait que** le matériau du tuyau de boyau de saucisse est choisi parmi un ou une combinaison de polyéthylène, polypropylène, chlorure de polyvinyle et polycarbonate.

8. - Tuyau de boyau de saucisse selon la revendication 7, **caractérisé par le fait que** le polyéthylène est un polyéthylène de qualité alimentaire.

9. - Utilisation du tuyau de boyau de saucisse de l'une quelconque des revendications 1 à 8, **caractérisée par le fait qu'**il est appliqué en tant qu'élément de support du boyaux de saucisse.

10. - Procédé d'utilisation du tuyau de boyau de saucisse tel que défini dans l'une quelconque des revendications 1 à 8, **caractérisé en ce que** le procédé comprend au moins l'étape consistant à : faire glisser le boyaux de saucisse à partir de l'extrémité de la pièce de pression en forme d'arc.
